(19) Europäisches Patentamt
European Patent Office
Office européen des brevets

(11) **EP 0 521 804 B2**

(12) **NOUVEAU FASCICULE DE BREVET EUROPEEN**
Après la procédure d'opposition

(45) Date de publication et mention de la décision concernant l'opposition:
**29.10.2008 Bulletin 2008/44**

(51) Int Cl.:
**D21H 19/38** *(2006.01)*  **D21H 23/56** *(2006.01)*
**D21H 25/08** *(2006.01)*  **E04C 2/04** *(2006.01)*

(45) Mention de la délivrance du brevet:
**03.12.1997 Bulletin 1997/49**

(21) Numéro de dépôt: **92420225.2**

(22) Date de dépôt: **30.06.1992**

(54) **Papier utile comme papier de revêtement pour les plaques de plâtre**

Papier, verwendet als Auflagepapier für Gipsplatten

Paper useful as covering paper for plasterboards

(84) Etats contractants désignés:
**AT BE CH DE DK ES FR GB GR IT LI LU MC NL PT SE**

(30) Priorité: **02.07.1991 FR 9108518**

(43) Date de publication de la demande:
**07.01.1993 Bulletin 1993/01**

(73) Titulaire: **LAFARGE PLATRES**
**84800 L'Isle sur la Sorgue (FR)**

(72) Inventeurs:
• **Moisset, Jacques**
**F-84800 l'Isle sur la Sorgue (FR)**
• **Bergey, Jean-Pierre**
**F-84800 l'Isle sur la Sorgue (FR)**

(74) Mandataire: **Martin, Didier Roland Valéry et al**
**Cabinet Didier Martin**
**50, chemin des Verrières**
**69260 Charbonnières-les-Bains (FR)**

(56) Documents cités:
**EP-A- 0 229 562**    **EP-A1- 0 128 681**
**EP-A1- 0 406 550**   **WO-A-88/03871**
**WO-A-90/09483**      **US-A- 3 507 684**
**US-A- 3 694 298**    **US-A- 4 020 237**

**EP 0 521 804 B2**

**Description**

La présente invention concerne une plaque de plâtre revêtue d'un papier de revêtement pour les plaques de plâtre.

Les plaques de plâtre sont classiquement composées d'un corps de plâtre coulé en usine entre deux feuilles de papier constituant à la fois son parement et son armature.

La fabrication de ces plaques de plâtre est réalisée par l'enchaînement des opérations suivantes :

- deux bobines de papier sont déroulées en continu, l'une sous le mélangeur comportant la pâte de plâtre (papier de parement), l'autre au-dessus,
- le plâtre gâché est coulé sur la feuille de papier inférieure dont les bords ont été repliés,
- la feuille de papier supérieure vient refermer le moule ainsi constitué, ses bords sont collés sur les bords repliés de la feuille inférieure,
- l'ensemble est "laminé" par un cylindre ou une plaque de formage et transporté sur un tapis puis des rouleaux jusqu'au "couteau" ou "cisaille",
- la prise ayant eu lieu entre-temps, les plaques sont coupées à longueur, retournées afin que le papier de parement ne souffre pas des transferts suivants, distribuées sur les étages d'introduction dans le sécheur,
- les plaques, humides à ce stade, sont séchées pendant 3/4 d'heure environ, puis défournées,
- elles sont recoupées à la longueur précise désirée, assemblées deux à deux (pour les manutentions ultérieures sur chantier), puis empilées,
- dès lors, elles sont utilisables sur le chantier.

Les deux points sensibles de cette fabrication qui requièrent une attention toute particulière sont le temps de prise du plâtre et le séchage :

- le premier parce que pour une chaîne donnée, il en limite souvent la vitesse, donc la capacité de production,
- le second parce qu'il conditionne pour l'essentiel la qualité du produit fini.

La prise de plâtre doit être contrôlée afin qu'elle ne commence qu'à la sortie du mélangeur et que le plâtre ait suffisamment durci pour pouvoir être tranché environ 5 minutes plus tard. De la maîtrise de ce phénomène dépendra le rapport entre la vitesse de fonctionnement (donc la productivité) et la longueur de la chaîne de fabrication (donc le coût d'investissement). Lors de la prise du plâtre, un autre paramètre également important pour atteindre des performances, tant en productivité qu'en coût d'investissement, réside dans le papier utilisé. En effet, la pâte de plâtre, quand elle est coulée entre les feuilles de papier, est fortement chargée en eau, jusqu'à 50 % en poids d'eau. Chaque $m^2$ de papier peut alors absorber de l'ordre de 200 g d'eau. Pour résister sans se dégrader, aussi bien à la présence d'eau qu'à la vitesse de déroulement du tapis transporteur des plaques en formation, le papier doit posséder des capacités d'absorption d'eau importantes ainsi que de bonnes résistances physiques et dimensionnelles en milieu humide.

Les caractéristiques du papier constituent en outre un paramètre de première importance pour l'opération de séchage. Cette opération consiste à extraire l'eau contenue en excédent par rapport à la quantité nécessaire à la seule reconstitution de gypse à partir du plâtre, en faisant circuler un flux d'air chaud autour des plaques. Afin que l'opération de séchage soit la plus rapide possible, le papier doit être suffisamment poreux pour favoriser la migration de l'eau. Car ainsi on peut diminuer la température des gaz de séchage, obtenir un séchage plus rapide et par suite, le coût de cette opération peut être diminué de façon appréciable.

En outre, le papier doit posséder une bonne stabilité dimensionnelle à la température, car la température de séchage est relativement élevée : le séchage de la plaque de plâtre est généralement réalisé à une température comprise entre 100°C et 200 °C pendant une période excédant 20 minutes, et généralement de l'ordre de 30 minutes.

Sinon, si la porosité du papier est insuffisante ou si sa stabilité dimensionnelle à la température est trop faible, on accroît les risques de décollement entre le papier et l'âme de plâtre qui se traduit notamment par la formation de cloques qui rendent le produit non commercialisable.

Habituellement, on choisit des papiers pour plaques de plâtre qui, après conditionnement à 23°C et 50 % d'humidité relative selon la norme NF Q 03-010, vérifient les caractéristiques suivantes :

| TEST | VALEURS USUELLES |
|---|---|
| Grammage (NF Q 03-019) | 200 à 275 g/$m^2$ |
| Epaisseur (NF Q 03-016) | 0,2 à 0,5 mm |

(suite)

| TEST | VALEURS USUELLES |
|---|---|
| Absorption d'eau sur la face intérieure, i.e. la face en contact avec l'âme de plâtre, ou Cobb 3 minutes (NF Q 03-014) | 20 à 70 g/m$^2$ |
| Absorption d'eau sur la face extérieure ou Cobb 3 minutes (NF Q 03-014) | 20 à 100 g/m$^2$ |
| Perméabilité à l'air (Porosité GURLEY) (NF ISO 5636/5) | habituellement entre 25 s à 100 s et dans certains cas pouvant aller jusqu'à 135 s |
| Résistances à rupture mesurées sur des éprouvettes de largeur égale à 15 mm (sens long : SL, sens transversal : ST) (NF Q 03-004) | ST de 4 à 9 daN<br>SL de 15 à 25 daN |
| Résistances interplis | de 30 à 110 J/m$^2$ |
| Allongement sous eau mesuré à 1 minute à 23°C dans le sens transversal (NF Q 03-063) | inférieur à 4 % |

Usuellement, l'une des deux feuilles de papier utilisées pour fabriquer les plaques de plâtre est de couleur foncée, pouvant varier entre une couleur grise et une couleur marron car elle est composée de fibres cellulosiques n'ayant pas subi un traitement de purification particulier. Classiquement, ce papier dit gris est obtenu à partir de pâte chimique non blanchie et/ou de pâte mécanique et/ou de pâte thermomécanique et/ou de pâte mi-chimique. Par pâte mécanique, on entend habituellement une pâte obtenue entièrement par des moyens mécaniques à partir de diverses matières premières, essentiellement de bois, pouvant être apportées par des produits de récupération issus du bois tels que des vieux cartons, des rognures de papier kraft et/ou de vieux journaux. Par pâte thermomécanique, on entend une pâte obtenue par traitement thermique suivi d'un traitement mécanique de la matière première. Par pâte mi-chimique, on entend une pâte obtenue en éliminant de la matière première une partie de ses composants non cellulosiques au moyen d'un traitement chimique ; un traitement mécanique ultérieur est nécessaire pour disperser les fibres. Pour des raisons pratiques, dans la suite de la description, l'expression "pâte mécanique" désignera aussi bien des pâtes chimiques non blanchies, des pâtes thermomécaniques, des pâtes mi-chimiques, les pâtes mécaniques telles que définies ci-dessus, ainsi qu'un mélange de deux ou de plusieurs de ces pâtes.

L'autre feuille a une face dite de couleur "crème" : il s'agit du papier de parement. Cette face de couleur crème constitue la face apparente des plaques de plâtre standards une fois posées. Pour obtenir cette couleur, la ou les couches de cette face sont à base de pâte chimique éventuellement blanchie, composée de fibres de cellulose recyclées et/ou neuves, et/ou de "pâte mécanique" éventuellement blanchie. Par pâte chimique, on entend une pâte obtenue en éliminant de la matière première par un traitement chimique, par exemple par cuisson en présence d'agents chimiques appropriés tels que la soude ou des bisulfites, une très grande proportion de ses composants non cellulosiques. Quand ce traitement chimique est complété par un traitement de blanchiment, on élimine une grande partie des substances colorées qui accompagnent les fibres cellulosiques, ainsi que les substances risquant de se dégrader en vieillissant et de donner des teintes jaunes désagréables liées à la présence de substances, telles que la lignine.

Dans la suite de ce texte, on désignera la feuille comprenant une face de couleur "crème" par "papier crème".

Pour des raisons d'économie, les qualités esthétiques du papier crème sont de moins en moins bonnes : en particulier, l'épaisseur de la couche crème du papier est de plus en plus mince et la pureté des fibres cellulosiques choisies est de moins en moins bonne. En conséquence, la couleur du papier crème est de qualité très variable, pouvant aller d'une teinte grise ou jaune à une teinte blanche. Or le marché de la plaque de plâtre demande des surfaces de qualités esthétiques améliorées pour ne pas avoir à effectuer la finition tout de suite.

Dans le but de réaliser un papier présentant des qualités améliorées de résistance et de porosité et qui soit en outre économique, la demande de brevet internationale WO-A-88/03871 propose un papier à base de fibres issues de papier recyclé, de qualité non blanche, sur lequel on dépose une sauce de revêtement composée d'une charge ou d'un pigment, blanc et d'origine minérale, d'un liant, de kaolin et éventuellement d'autres adjuvants. Ce papier est dépourvu de fibres cellulosiques provenant d'une pâte chimique blanchie : selon cette demande, la couleur "crème" est apportée par la sauce de revêtement.

Des papiers ayant la composition décrite dans cette demande ont été fabriqués et utilisés comme papiers de revêtement des plaques de plâtre. Ces papiers présentent effectivement une excellente porosité mais qui se traduit par l'absorption d'une grande part des compositions de revêtement. L'absorption de la composition pigmentaire est en outre accrue par le mode de couchage préconisé qui est, en l'espèce, une boîte à eau montée sur calandre qui, d'une part impose des sauces à faible extrait sec et d'autre part privilégie la pénétration de la sauce dans le papier. Il faut remarquer que le système de dépose envisagé génère le plus souvent une répartition hétérogène de la sauce.

La répartition de la teinte crème résultante est très irrégulière : elle est en effet mouchetée, c'est-à-dire composée de tâches claires qui ressortent fortement par rapport au reste du papier qui est, dans ce cas, de couleur relativement grise et/ou marron. Outre une porosité qui est très variable d'un point à un autre, ces papiers présentent un état de surface de qualité médiocre sous la forme d'irrégularités de relief. Les variations de porosité associées aux variations d'état de surface génèrent vraisemblablement des variations de pénétration et de fixation de la sauce de couchage, et ceci d'autant plus que l'extrait sec de la sauce de couchage est faible, pouvant expliquer l'absence d'uniformité de la coloration de ces papiers. Le contraste est d'autant plus marqué que l'écart de coloration qui existe entre le papier et la couche pigmentaire est important.

De plus, le mode d'enduction cité dans la demande internationale WO-A-88/03871 ne permet pas de garantir une dépose homogène sur le papier : le film de sauce créé sur la calandre par ce système d'enduction n'est pas homogène et par conséquent son report sur le papier ne peut pas l'être non plus.

L'utilisation d'une charge blanche réputée pour son pouvoir couvrant élevé, l'oxyde de titane en l'occurrence, conformément aux conditions opératoires prescrites par cette demande, n'a pas permis d'éliminer la formation des tâches blanches et contrastées sur fond gris. Il faut utiliser une proportion élevée de ce pigment blanc connu pour ses qualités d'opacifiant, pour obtenir les qualités esthétiques recherchées et dans ce cas, le coût des papiers obtenus est prohibitif pour une application plaques de plâtre. En outre, en augmentant ainsi l'épaisseur de la couche de revêtement, on diminue de façon importante la porosité du papier, et par suite, les risques de décollement du papier sous la forme de cloques notamment, sont accrûs.

En conclusion, les qualités esthétiques des papiers décrits dans la demande internationale WO-A-88/03871 ne sont pas satisfaisantes et leur amélioration grâce à un apport supplémentaire de pigment n'est pas acceptable dans le domaine des plaques de plâtre pour des raisons économiques.

La demande EP-A-0 229 562 décrit un papier à double couche pour l'emballage, présentant une aptitude améliorée à l'impression. Une deuxième couche de revêtement comprend des fibres cellulosiques blanchies, et des charges minérales, à raison de 25 à 50 % en poids de matière sèche de la couche, lui conférant une pigmentation blanche. Toutefois, le papier visé par cette demande ne convient pas à une utilisation comme revêtement de plaques de plâtre.

Une autre difficulté majeure ayant trait également aux qualités esthétiques des plaques de plâtre se pose si les plaques de plâtre ne sont pas utilisées rapidement, ce qui est fréquemment le cas. En effet, le papier de revêtement des plaques de plâtre, et en particulier le papier de parement de couleur crème, prend une teinte jaune désagréable sous l'action de la lumière.

Ce jaunissement a pour principale origine les impuretés présentes avec les fibres cellulosiques du papier. En effet, les fibres cellulosiques, selon leur degré de pureté, contiennent des quantités plus ou moins importantes de substances d'origine naturelle ayant la propriété de jaunir sous l'action de la lumière. En outre, elles peuvent également contenir des substances de couleurs foncées lorsqu'elles proviennent de papier recyclé. Les traitements pour éliminer complètement ces substances sont complexes ainsi que coûteux et ils ne peuvent être envisagés industriellement que pour des applications papetières très spécifiques.

Or, il se passe généralement une période assez longue entre le moment où les plaques de plâtre sortent des chaînes de fabrication et celui où, une fois la plaque posée, le papier crème reçoit la couche finale de décoration : parmi les opérations principales auxquelles sont soumises les plaques de plâtre au sortir de l'atelier de production, on peut indiquer le stockage sur le lieu de fabrication et ensuite sur le chantier de construction, suivi par la pose de la plaque. Avant que la décoration finale ne soit effectuée (pose de papier peint, peinture, etc...), un délai encore important peut s'écouler, pouvant aller jusqu'à 6 mois. A l'occasion de ces différentes opérations, le papier "crème" est à de multiples occasions exposé à la lumière, et progressivement a tendance à prendre des teintes jaunes désagréables d'indice assez élevé car, comme évoqué précédemment, sa couche supérieure n'est pas composée à 100 % que de fibres de cellulose neuves provenant de pâte chimique blanchie, et ceci essentiellement pour des raisons d'économie.

Or, la perception de ces teintes jaunes est encore accentuée par la couleur blanche des joints disposés entre les plaques.

Une perte du degré de blancheur et une augmentation de l'indice de jaune sont également constatées lors de l'exposition à la lumière de papier revêtu d'une couche de polymères. Ce phénomène a notamment été observé sur des papiers siliconés, des papiers amidonnés et des papiers revêtus d'une couche superficielle de colle. Pour masquer les teintes jaunâtres, rendre les joints invisibles par rapport aux plaques et décorer ces plaques, on a l'habitude d'augmenter la couche de décoration appliquée sur la plaque d'une quantité supplémentaire et suffisante de produit de finition, et ce d'autant plus que la couleur de couche de décoration est claire. Une telle solution n'est donc pas économique dans la mesure où elle implique l'utilisation d'une quantité importante de produit de décoration généralement onéreux.

Un autre défaut réside dans le fait que, si l'on colle un papier peint directement sur le papier crème sans réaliser une couche d'apprêt intermédiaire, il est, par la suite, très difficile d'enlever ce papier peint sans arracher en même temps en partie ou en totalité le papier crème de la plaque de plâtre. Une première conséquence est la diminution des propriétés mécaniques de la plaque. Une seconde conséquence provient de l'aspect esthétique des plaques qui comportent des parties intactes (crèmes) et des parties arrachées, de couleur grise et/ou marron. Pour masquer ces différences de teintes, on est obligé d'appliquer une couche de décoration importante. Cette solution n'est bien sûr pas satisfaisante en raison de son coût.

Un autre défaut du papier crème réside dans le fait qu'il peut être très facilement sali lors des diverses manipulations auxquelles sont soumises les plaques de plâtre, et ces salissures sont, pour la plupart, quasiment impossibles à éliminer. De la même façon que pour les teintes jaunes désagréables, on a habituellement recours à une quantité de couche de finition supplémentaire pour masquer ces salissures.

La présente invention a pour objet une plaque de plâtre revêtue d'un papier de revêtement pour les plaques de plâtre, qui ne présente pas les défauts des papiers connus, mais qui remplit les différents rôles recherchés dans ce domaine technique.

Un objectif principal est un papier qui, tout en étant à la fois simple et économique, conserve sensiblement sa couleur initiale lorsqu'il est exposé à la lumière.

Un autre objectif est un papier qui soit suffisamment poreux pour être utilisé comme papier de revêtement dans la fabrication des plaques de plâtre et pour permettre d'effectuer leur séchage sans augmentation notable de la température et du temps de séchage, ni risque de décollement du papier de l'âme de plâtre.

Un autre objectif est un papier qui présente la propriété d'être facilement nettoyé lorsqu'il est sali par des substances d'origine minérale, comme cela peut fréquemment se produire sur un chantier de construction.

Un autre objectif est un papier ne nécessitant pas de couche d'apprêt intermédiaire et qui, lorsqu'il est associé à du papier peint par collage, permet le décollage de ce papier peint sans subir de détérioration.

Un autre objectif est un papier qui présente une aptitude à la mise en peinture largement satisfaisante.

Plus précisément, la présente invention a pour objet une plaque de plâtre revêtue d'un papier utile comme papier de revêtement pour les plaques de plâtre, composé d'une feuille de papier de revêtement pour plaque de plâtre revêtue d'une couche pigmentaire, cette dernière étant à base d'au moins une charge minérale de couleur claire, notamment blanche, et comportant au moins un liant et, si nécessaire, de divers adjuvants permettant de préparer une sauce pigmentaire de rhéologie convenable. Le papier est plus particulièrement caractérisé en ce que le jet supérieur de la feuille de papier ayant un degré de blancheur supérieur à 50, sur lequel est appliquée ladite couche pigmentaire, est à base d'au moins une charge minérale de couleur claire, et de préférence blanche, et de fibres cellulosiques blanchies, majoritairement chimiques, neuves ou de récupération, en ce que la charge minérale de la couche pigmentaire est de nature chimique identique ou différente de celle composant ledit jet, le poids de la couche pigmentaire déposée est compris entre 8 et 30 g/m2, et en ce que la perméabilité à l'air (Porosité Gurley : NF Q 03-061) du papier couché, avant qu'il ne subisse une opération de séchage dans des conditions de température similaires à celles utilisées lors du séchage de la plaque de plâtre, est de 100 s à 150 s.

La sauce pigmentaire utilisée pour préparer le papier de revêtement pour les plaques de plâtre tel que défini dans les revendications précédentes est caractérisée en ce que la charge minérale entrant dans la composition de la couche pigmentaire est du sulfate de calcium dihydraté sous forme d'aiguilles, de préférence en combinaison avec le carbonate de calcium et/ou des matières pulvérulentes d'origine minérale, inertes et blanches, telles que le talc, le kaolin et le dioxyde de titane.

Le procédé de couchage d'un papier avec une sauce pigmentaire mis en oeuvre dans le cadre de l'invention est caractérisé en ce que, en vue de préparer le papier de revêtement des plaques de plâtre, la sauce est celle définie précédemment, possédant un extrait sec élevé, généralement supérieur à 60 % en poids, et son application est effectuée à l'aide des moyens mécaniques de dépose choisis parmi ceux favorisant un dépôt de couche pigmentaire majoritairement sur la surface du jet crème, tels que les systèmes à lame raclante, lissante ou les systèmes à barres égalisatrices.

Le procédé de couchage d'un papier avec une sauce pigmentaire mis en oeuvre dans le cadre de l'invention est caractérisé en ce que, en vue de préparer le papier de revêtement des plaques de plâtre, la sauce est celle définie précédemment, possédant un extrait sec variant entre 40 % et 60 % en poids, et son application est effectuée à l'aide des moyens mécaniques de dépose choisis parmi ceux favorisant un dépôt de couche pigmentaire sur la surface du jet crème, tels que les systèmes d'enduction de type rouleaux, ou les systèmes à lame d'air.

En vue de préparer le papier de revêtement des plaques de plâtre, la sauce est celle définie précédemment, possédant un extrait sec supérieur à 40 % en poids, et son application est effectuée à l'aide des moyens mécaniques de dépose choisis parmi ceux favorisant sa pénétration, tels que les systèmes à calandre de remouillage, en ce que la charge minérale prescrite dans la sauce pigmentaire est très opacifiante telle que le sulfate de calcium à particules en forme d'aiguilles, et en ce que le poids de couche pigmentaire déposé est compris entre 8 et 30 g/m2.

L'objet de la présente invention est une plaque de plâtre revêtue d'un papier tel que précédemment défini.

Le poids de la couche pigmentaire est obtenu par différence des grammages du papier couché et non couché selon le protocole indiqué dans la suite de ce texte. Conformément à une caractéristique de l'invention, le papier à revêtir possède une couche de dessus (jet supérieur) de composition choisie pour garantir l'opacité et des qualités esthétiques tant s'agissant de sa couleur (claire et uniforme) que de l'aspect de sa surface qui doit être homogène et régulier :

- en répartition de fibres,
- en rugosité de surface,
- en porosité ou capacité d'absorption en surface.

Comme cela sera expliqué dans la suite de ce texte, on a en effet trouvé que la combinaison de ce papier et de la couche pigmentaire définie dans l'invention assure au papier couché obtenu, des qualités esthétiques durables, et ceci sans influencer le procédé de fabrication des plaques de plâtre incorporant un tel papier couché, ni dégrader les caractéristiques mécaniques du papier et des plaques.

Dans la suite de la présente description, on désignera par l'expression "papier couché" le papier conforme à l'invention défini ci-dessus, par opposition au papier classiquement utilisé pour les plaques de plâtre, qui ne comporte pas un tel revêtement.

Par le terme "jet", on désigne une nappe fibreuse de composition homogène de la feuille de papier, qui est formée sur la machine à papier, par exemple soit sur la toile ou sur la forme d'une machine à papier.

Le papier couché selon l'invention est composé d'une feuille de papier dont la couche fibreuse de dessus, c'est à dire la portion de la feuille de papier regardant vers l'extérieur (par opposition à la couche le dessous correspondant à la portion de la feuille destinée à être mise en contact avec l'âme de la plaque de plâtre), est recouverte d'une couche pigmentaire, celle-ci étant à son tour destinée à être recouverte d'une couche de décoration, par exemple du papier peint ou de la peinture. La couche fibreuse du dessus de la feuille de papier peut être constituée d'un ou de plusieurs jets de même composition de fabrication, combinés par pression à l'état humide.

Conformément à un mode de réalisation préféré de l'invention, on réalise un couchage majoritairement sur la surface du papier pour laquelle on recherche une bonne tenue à la lumière. Le papier couché obtenu présente les qualités esthétiques durables recherchées, à savoir une coloration claire, que l'on choisit de préférence blanche, qui est en outre uniformément répartie.

Bien que la valeur de la perméabilité à l'air (Porosité Gurley) des papiers couchés selon l'invention, obtenue dans les conditions normalisées ISO 5636/5, soit nettement supérieure à celle qui est généralement admise dans le domaine des plaques de plâtre, on a observé en outre, de façon surprenante, qu'un tel couchage n'entraîne aucune perte de la perméabilité lors du séchage de la plaque de plâtre et n'influe pas sur la fabrication des plaques de plâtre, et surtout, n'oblige pas à ralentir la vitesse de production.

La perméabilité à l'air ou porosité Gurley est mesurée selon la méthode normalisée ISO 5636/5 : par cette méthode on mesure le temps de passage d'un volume d'air déterminé sous une pression constante à travers une surface de papier définie.

En effet, il faut noter que classiquement, on choisissait des papiers pour plaques de plâtre de porosité inférieure à une valeur de 100 s (Gurley), et plus exceptionnellement inférieure à 135 s, ceci afin de favoriser une vitesse de fonctionnement lors du séchage qui soit économiquement acceptable. Or, la perméabilité à l'air (Gurley) du papier couché conforme à l'invention, avant de subir une opération de séchage dans des conditions de température similaires à celles auxquelles est soumise la plaque de plâtre lors de sa fabrication, est généralement supérieure à 100 s (Gurley), et plus généralement de l'ordre de 150 s (Gurley). Dans ces conditions, il était à craindre un ralentissement de la fabrication de la plaque de plâtre dû à l'emploi de ce papier couché. Au contraire, on a découvert que l'utilisation du papier couché selon l'invention n'influe pas le procédé de fabrication des plaques de plâtre.

De préférence, on effectue un dépôt de couche pigmentaire de grammage compris entre 8 et 30 g/m$^2$. De préférence encore, les papiers couchés selon l'invention ne comprennent que 10 à 15 g/m$^2$ de couche pigmentaire : dans ces conditions, l'ensemble des objectifs précités a pu être atteint.

Le papier couché selon l'invention est avantageux à plus d'un titre :

- il permet d'avoir une teinte uniforme de parement des plaques de plâtre de degré de blancheur élevé, et avec les nuances de teinte désirées, si bien que l'occupant de la pièce dont les cloisons sont faites avec de telles plaques n'a pas à peindre immédiatement ;

- il ralentit et limite fortement le jaunissement de la plaque de plâtre lors de son exposition au soleil ou à la lumière grâce à sa tenue à la lumière tout à fait satisfaisante dans des conditions normales d'utilisation ;

- il est facilement nettoyé : dans des conditions modérées telles que de l'eau additionnée de savon, on parvient aisément à éliminer les impuretés minérales qui ont pu y adhérer ;

- il permet de diminuer dans des proportions notables, la quantité de peinture nécessaire pour peindre de telles plaques, d'où une économie sensible pour le client ;

- l'usage d'un agent d'apprêt avant le collage du papier peint n'est plus nécessaire avec le papier couché selon l'invention. Sans avoir à faire une préparation de surface, le papier couché selon l'invention autorise le décollage correct du papier peint auquel il est lié, d'où une économie sensible pour le client. En effet, le papier couché selon l'invention présente une bonne résistance à l'arrachement. De ce fait, il permet, dans des conditions normales de décollage, une séparation du papier peint d'avec le papier couché sans arrachage de la couche pigmentaire ni du jet supérieur.

Conformément à une caractéristique principale de l'invention, l'état de la surface du papier sur laquelle une couche pigmentaire est appliquée, est prévu avec des qualités esthétiques supérieures. De préférence, la surface du jet supérieur de ce papier est de blancheur supérieure à 50, et de préférence encore supérieure à 60, dans les conditions de mesure conformes à la norme NF Q 03-039.

Avantageusement, la rugosité de la surface du jet supérieur de papier sur lequel une couche pigmentaire est appliquée, est inférieure à 1 500 Bendtsen, et de préférence encore inférieure à 1 000 Bendtsen, dans les conditions de mesure conformes à la norme NF Q 03-049.

Les fibres cellulosiques blanchies, majoritairement chimiques, et les charges qui composent majoritairement le jet supérieur du papier lui confèrent une teinte variant entre les teintes crèmes et blanches. Dans ce qui suit, on le désignera par " jet crème". Cette terminologie sera conservée dans le cas où un agent colorant sera incorporé dans le jet crème. Le jet crème est conçu pour constituer une couverture qui soit opaque, de teinte claire et uniformément répartie, et dont l'état de surface soit lisse. Pour ce faire, on prépare le jet crème à partir de fibres cellulosiques blanchies, neuves ou de récupération, issues majoritairement de pâte chimique blanchie, et d'au moins une charge minérale blanche telle que le talc ; la charge minérale pourra être neuve ou de récupération. Selon le cas, on devra ajouter la charge minérale blanche nécessaire à la préparation du jet crème (cas où les fibres sont à 100 % chimiques et neuves) ou on se contentera de la charge minérale blanche apportée par les matières fibreuses recyclées, si elle permet d'obtenir une opacité suffisante. On limite de préférence la teneur globale en charge minérale du jet crème à une valeur de 35 % maximale, car au-delà de cette valeur, selon la machine à papier utilisée et la teneur en fibres du jet, les risques de perte en cohésion et donc l'obtention de propriétés mécaniques insuffisantes sont accentués.

De préférence, le jet crème est constitué d'au moins 65 % en poids de fibres cellulosiques chimiques blanchies.

On a observé que la tenue à la lumière et au soleil des papiers couchés selon l'invention est bonne (absence de jaunissement rapide dans des conditions normales d'utilisation) si la teneur en "pâte mécanique" (incluant comme arrêté précédemment les pâtes chimiques non blanchies, les pâtes thermomécaniques et/ou les pâtes mi-chimiques) du jet crème est limitée. De préférence, la teneur en "pâte mécanique" du jet crème, n'excède pas 30 % en poids, rapporté au poids sec du jet crème.

Conformément à l'invention, les différentes matières premières fibreuses, neuves ou de récupération, employées pour préparer le jet crème, sont telles que les fibres cellulosiques qui les composent sont blanchies et majoritairement chimiques. De préférence, les matières premières fibreuses choisies vérifient également l'une au moins des variantes préférées indiquées précédemment.

Avantageusement, on se sert de vieux papiers de qualité blanche, non imprimés, pour introduire dans la préparation fibreuse servant à fabriquer le jet crème des fibres cellulosiques blanchies, de récupération, chimiques, ainsi que éventuellement des fibres cellulosiques blanchies et mécaniques.

De préférence encore, on choisit les vieux papiers de qualité blanche parmi les vieux papiers dits de qualités supérieures, groupe C, conformément à la nomenclature européenne de vieux papiers (CEPAC - 1990). Parmi ceux-ci, on choisit plus particulièrement :

C7- Archives blanches sans bois.
Papiers d'écriture et d'impression blancs, triés, sans bois, en provenance d'archives de bureau, exempts de registres de caisse, de papier carbone et de dos collés insolubles à l'eau, ne contenant pas plus de 3 % de papiers autocopiants colorés. Total des matières inutilisables : 1 % max.

C8- Formulaires en continu, blancs, sans bois.
Liasses et formulaires en continu, sans bois, blancs, ne contenant pas plus de 3% de papiers autocopiants colorés.

C9- Formulaires en continu blancs, sans bois, sans colorants.
Liasses et formulaires en continu, sans bois, blancs, exempts de papiers autocollants colorés.

C11- Carton blanc multicouche sans impression.
Chutes de carton blanc multicouche neuf, sans couche grise, sans impression.

C12- Papier journal blanc.

Rognures et feuilles de papier journal blanc, non imprimé, exemptes de papier magazine.

C14- Papier blanc, couché, avec bois.
Rognures et feuilles de papier blanc couché, avec bois, non imprimé.

C15- Papier blanc, couché, sans bois.
Rognures et feuilles de papier blanc couché, sans bois, non imprimé.

C16- Rognures blanches avec bois.
Rognures et feuilles de papier blanc avec bois non imprimé, exemptes de papier journal et de magazine, ne contenant pas plus de 20 % de papiers couchés.

C17- Rognures blanches mêlées.
Rognures et feuilles de papier blanc non imprimé, exemptes de papier journal et de magazine, avec un minimum de 60% de papier sans bois, pouvant contenir un maximum de 10% % de papiers couchés.

C18- Rognures blanches sans bois.
Rognures et feuilles de papier blanc sans bois, non imprimé, pouvant contenir un maximum de 5% de papiers couchés.

C19- Rognures blanches sans bois, non couchées.
Rognures et feuilles de papier blanc sans bois, non imprimé, exemptes de papiers couchés,

ou un mélange de deux ou de plusieurs des vieux papiers précités.

A la condition que le degré de blancheur du jet crème reste élevé, et de préférence soit supérieur à 60 (NF-Q 03-039), on peut lui incorporer un agent colorant, en faible quantité, pour donner au papier une nuance uniforme permettant de masquer certains défauts du papier.
La ou les couches sous-jacentes du jet crème sont, comme le papier dit gris, d'une couleur foncée pouvant varier entre une couleur grise et une couleur marron. Elles sont obtenues à partir de pâte mécanique et/ou de pâte chimique non blanchie. En pratique, ces pâtes sont souvent préparées à partir de matières premières de récupération, telles que, à titre d'exemple, le papier kraft, les rognures de kraft, les vieux cartons ondulés et/ou les vieux journaux.

A titre d'exemple, les papiers recyclés cités dans la demande de brevet internationale WO-A-88/03871 conviennent à la préparation de ces couches sous-jacentes de couleur foncée.

On peut en outre avoir entre le jet crème et la ou les couches sous-jacentes de couleur foncée, une seconde couche de couleur crème également : cette couche de couleur "crème" peut être de composition similaire à celle du jet crème décrite ci-dessus. Elle pourra en outre comprendre une proportion de pâte mécanique blanchie supérieure à celle préconisée pour le jet crème.
Avantageusement, le papier à revêtir est un papier traité pour éviter une reprise d'humidité tel qu'un papier dont le jet "crème" est recouvert d'un film à base de silicone.

La sauce de couchage se présente sous la forme d'une suspension aqueuse, plus ou moins fluide suivant sa composition et sa teneur en matières sèches.

La teneur en matières sèches de la sauce est étroitement liée au système de couchage utilisé. Avantageusement, afin de favoriser une dépose en surface et donc pour éviter sa pénétration dans le papier, la teneur en matières sèches sera choisie supérieure à 40 % en poids.

La charge minérale servant à la préparation de la sauce pigmentaire peut aussi bien être pulvérulente qu'en suspension dans l'eau. En tant que charge minérale, on utilise avantageusement le sulfate de calcium dihydraté et le carbonate de calcium, qui en raison de leur disponibilité commerciale, sont d'un coût très avantageux. Le sulfate de calcium dihydraté et le carbonate de calcium procurent en outre des résultats particulièrement bons, tant sur le plan esthétique que comme protection, en particulier à l'égard de la lumière, grâce en particulier à leur pouvoir opacifiant important.
Le sulfate de calcium dihydraté présente l'avantage supplémentaire de blanchir lorsqu'il subit un traitement thermique : ce blanchiment est avantageusement obtenu lors du séchage du papier couché, et en particulier lors du séchage des plaques de plâtre revêtues de ce papier couché. On choisit de préférence le sulfate de calcium dihydraté dont les particules ont une forme d'aiguilles car elles favorisent une répartition homogène en surface permettant de couvrir parfaitement avec un faible poids de couche déposé. En outre, on a observé que le sulfate de calcium dihydraté en forme d'aiguilles confère à la couche pigmentaire une structure de faible compacité et ouverte propice à la porosité.
De préférence encore, on le choisit en forme d'aiguilles de longueur comprise entre 3 et 5 micromètres.

Le sulfate de calcium, dont les particules sont en forme de sphère, permet aussi d'obtenir une couverture blanche présentant les qualités esthétiques ainsi que les propriétés mécaniques recherchées.

Egalement permettant d'atteindre les objectifs précités en tant que charge minérale, le talc, le kaolin, le dioxyde de titane, et toutes matières pulvérulentes d'origine minérale, inertes et blanches conviennent à l'invention. Ces matières peuvent être employées seules ou en combinaison. De préférence, elles sont utilisées en combinaison avec le sulfate de calcium dihydraté et/ou le carbonate de calcium. En raison de la capacité que les couches pigmentaires à base de dioxyde de titane ont à se marquer très facilement par frottement avec certains métaux, et du coût prohibitif de cette charge, on recommande de l'utiliser en combinaison avec des matières minérales pour réduire ces inconvénients.

En tant que liant, les matières polymères habituellement employées avec les charges précitées conviennent.

On préfère tout particulièrement, en raison de leur bonne propriété de liant des charges minérales utilisées dans la couche pigmentaire, les matières polymères synthétiques telles que les copolymères styrène-butadiène, les acétates de polyvinyle et les polymères à base de monomères acryliques ; les matières polymères d'origine naturelle telles que les polymères amylacés, modifiés ou non, et les protéines telles que la caséine ; ou un mélange des matières polymères synthétiques et/ou des matières polymères d'origine naturelle précitées. L'amidon s'est révélé particulièrement intéressant en raison du fait qu'il est d'un coût avantageux. Les sauces de couchage qui en contiennent ont un pouvoir couvrant élevé et par conséquent le degré de blancheur atteint est plus élevé, et ceci malgré des extraits secs plus faibles des sauces de couchage amylacées comparées aux sauces de couchage à base de latex.

De préférence, la sauce pigmentaire utilisée pour réaliser le couchage du papier pour plaques de plâtre contient de 6 à 25 % en poids de liant calculé par rapport à la quantité totale de charge minérale. De préférence encore, le liant, lorsqu'il est d'origine synthétique, est utilisé à raison de 8 à 15 % en poids par rapport à la quantité totale de charge minérale, et à raison de 10 à 20 % lorsqu'il est amylacé.

Pour faciliter la préparation et l'emploi de la sauce pigmentaire, on lui incorpore divers adjuvants.

Pour obtenir une viscosité appropriée aux moyens mécaniques employés pour l'application sur le papier, on incorpore à la sauce pigmentaire au moins un agent fluidifiant, qui est de préférence un agent basique tel que la soude ou l'ammoniaque, ainsi qu'au moins un agent viscosifiant, connu pour ses propriétés de rétenteur d'eau. La dépose de la couche pigmentaire en surface est en effet avantageusement favorisée par l'emploi d'au moins un agent rétenteur d'eau.

De préférence, la quantité d'agents basiques est réglée pour obtenir un pH de l'ordre de 9.

En tant qu'agent viscosant convenant à l'invention, on peut utiliser les éthers de cellulose tels que l'hydroxyéthylcellulose, la méthylhydroxypropylcellulose, les éthers de cellulose anioniques tels que la carboxyméthylcellulose (CMC) ; l'alcool polyvinylique, les alginates de sodium, les galactomannanes ou un mélange de ces composés.

Lorsque la charge minérale est un sulfate de calcium, il faut noter que les éthers de cellulose anioniques peuvent avoir un effet fluidifiant sous certaines conditions (à savoir : faible quantité d'éther de cellulose anionique et taux modéré d'autres agents dispersants).

Avantageusement, la sauce de couchage est additionnée d'au moins un agent dispersant, ceci afin de compléter l'action mécanique lors de la dispersion des charges minérales, c'est à dire l'isolation de chaque particule dans la sauce de couchage, ainsi que de régler la viscosité de la sauce à un niveau compatible avec le système de couchage. L'ajout d'agent dispersant devient nécessaire pour les sauces de couchage à teneur en matières sèches élevée. A titre d'exemple d'agents dispersants, on peut employer les lignosulfonates ; les alcools gras, linéaires ou ramifiés, phosphatés et/ou sulfatés et/ou sulfonés et/ou phosphonés ; les (co)polymères acryliques, acides ou salifiés, comportant un contre-cation pouvant être un alcalin ou un alcalino-terreux et comportant des groupements fonctionnels tels que des groupements phosphatés et/ou phosphonés ; ou un mélange des agents dispersants précités.

On peut, en outre, ajouter dans la sauce de couchage des agents de conservation, des azurants optiques, des stéarates. On peut également ajouter des pigments colorés afin d'obtenir une couche pigmentaire dont la teinte soit la plus proche possible de la teinte du joint et d'éviter tout contraste entre eux, car la teinte du joint peut varier entre des teintes blanches ou crèmes avec des nuances plus ou moins rosées et/ou jaunes.

Afin d'éviter la formation de bulles et donc, d'obtenir une surface exempte d'irrégularités, on utilise de préférence un agent anti-mousse et on évite ceux susceptibles de former un film étanche.

Afin d'éliminer les risques de dégradation lors du mouillage du papier couché, par exemple à l'occasion de la pose des enduits de jointoiement entre les plaques de plâtre ou à l'occasion du décollage d'un papier peint, et de garantir le maintien des caractéristiques mécaniques de la couche pigmentaire, on ajoute au moins un agent insolubilisant permettant d'améliorer la résistance à l'eau tel que des résines thermodurcissables à base d'un produit de condensation d'urée et de formol modifié.

On prévoit avantageusement dans la sauce de couchage, au moins un agent capable d'empêcher la reprise d'eau las la couche pigmentaire une fois séchée, tel que de la silicone ou des cires microcristallines.

De la sorte, la cinétique de reprise d'eau des papiers couchés selon l'invention est grandement diminuée. En outre, on a observé que la tenue à l'humidité de ces papiers couchés, quand la couche pigmentaire contient un agent hydrofugeant, est nettement meilleure et supérieure à celle d'un papier traité ou non avec un agent hydrofugeant quand il est recouvert d'une même couche pigmentaire exempte d'agent hydrofugeant. On a, en effet, observé qu'il est plus facile d'obtenir les effets recherchés, avec la régularité recherchée, en ajoutant l'agent hydrofugeant dans la sauce de couchage plutôt qu'en effectuant un dépôt en surface de cet agent. Pour éviter des problèmes de cohésion entre la plaque de plâtre cartonnée et l'enduit de jointoiement, il est recommandé de ne pas employer trop d'agents hydrofugeants dans la sauce de couchage. De préférence, la teneur en agent hydrofugeant n'excède pas 2 % pondéral de la sauce pigmentaire, de préférence encore, elle est comprise entre 0,5 % et 2 % pondéral de la sauce pigmentaire.

Selon une première réalisation particulièrement avantageuse de l'invention, la sauce pigmentaire contient au moins un agent ignifugeant permettant d'abaisser le point d'inflammation du papier. A titre d'exemple d'agent ignifugeant, on peut citer les sulfamates et les halogénures d'antimoine tels que le chlorure d'antimoine et le bromure d'antimoine. Ainsi on améliore le comportement au feu des plaques de plâtre revêtues du papier couché selon l'invention.

Quand elle est soumise au test dit de la chambre de réaction au feu (test détaillé dans la suite de la description), l'incorporation d'un agent ignifugeant dans la couche pigmentaire permet d'augmenter le temps précédant l'inflammation de la plaque de plâtre. Si la quantité d'agent ignifugeant est suffisante, on parvient à éliminer l'inflammation de la plaque de plâtre ainsi traitée.

Ainsi, on observe une prolongation notable du délai d'inflammation des plaques de plâtre revêtues de papier couché, dès que le couchage renferme au moins un gramme de sulfamate par $m^2$ de plaque. Il ne se produit plus d'inflammation dans la majorité des plaques de plâtre revêtues de papier couché dès que la couche pigmentaire renferme au moins 4 g de sulfamate par $m^2$ de plaque.

Grâce à l'invention, pour un type de dépose défini, on atteint les objectifs précités avec un poids de couche pigmentaire d'autant plus faible que la teneur en matières sèches de la sauce pigmentaire est élevée et que la charge minérale est plus opacifiante.

Différents moyens mécaniques peuvent être utilisés pour appliquer la sauce de couchage sur le papier. Comme indiqué précédemment, le teneur en matières sèches est conditionnée par le choix de la technologie de dépose. On choisit de préférence les moyens mécaniques capables de réaliser un dépôt majoritairement en surface et utilisant des sauces de couchage à extrait sec élevé, généralement supérieur à 60 % en poids, tels que les systèmes à lame raclante, lissante ou les systèmes à barres égalisatrices, pour lesquels le surplus de sauce de couchage est directement enlevé sur le papier par un moyen mécanique. On peut également utiliser des moyens mécaniques favorisant une dépose en surface mais utilisant des sauces de couchage à extrait sec plus faible, compris entre 40 et 60 % en poids, tels que des systèmes à lame d'air.

Les systèmes mécaniques ayant tendance à favoriser la pénétration de la sauce de couchage mais capables de déposer des sauces de couchage à teneur en matières sèches supérieure à 40 % en poids, conviennent également. Dans cette dernière catégorie, on peut citer les systèmes d'enduction de type rouleaux pour lesquels un film de sauce est formé sur un rouleau avant d'être transféré sur le papier (ce transfert s'opérant dans un NIP donc sous pression) : des sauces à teneur en matières sèches comprise entre 40 et 60 % en poids peuvent être employées dans ce dernier cas. A la condition que le poids de couche déposé puisse être au moins de 8 g/m2 et que la charge minérale comprise dans la sauce de couchage soit très opacifiante, des systèmes favorisant la pénétration de la sauce et utilisant des sauces de couchage à faible extrait sec (20 à 30 % en poids) pourront également être utilisés : parmi ceux-ci, on peut citer les systèmes à calandre de remouillage.

Mais, l'invention sera mieux comprise par la description détaillée de certains exemples particuliers de réalisation donnés à titre illustratif et non limitatif de l'invention. Parmi ces exemples, les exemples 5 (Tab. III), 14 (bobines 1 à 4), 16a, et 21 et 22 sont ceux qui relèvent de l'invention.

Les sauces pigmentaires, les feuilles de papier revêtues de ces sauces et les plaques de plâtre exemplifiées sont, sauf indication contraire, contrôlées selon les méthodes ci-après :

Caractéristiques de la sauce de couchage

- Extrait sec (%)         : ISO 787/2 (pour les sauces comprenant du $CaSO_4$, $2H_2O$, une température de 55°C est utilisée pour ne pas le dégrader en semi-hydrate et anhydrite)

- Viscosité Brookfield (mpa.s)       : mesurée avec un appareil Brookfield RVT, avec des broches RV à 23°C et à 100 tr/min

- pH       : mesuré à 23°C à l'aide d'une électrode 12HA (haute alcalinité) étalonnée dans le domaine de mesure (pH 7 à 10) à la température de l'essai.

Caractéristiques de la feuille de papier non couché

- grammage (g/m2)          : NF Q 03-019
- épaisseur (mm)          : NF Q 03-016
- porosité à l'air des feuilles de papier (GURLEY)          : ISO 5636/5
- absorption d'eau ou Cobb 3 minutes (g/m2)          : NF Q 03-014
- degré de blancheur obtenu par le facteur de réflectance diffuse dans le bleu (longueur d'onde à 457 nm) des papiers pour apprécier l'un des éléments les plus importants liés à leur blancheur          : NF Q 03-039
- degré de jaune          : obtenu à l'aide de l'appareil de mesure ELREPHO DATACOLOR
- rugosité Bendtsen          : NF Q 03-049

Caractéristiques de la feuille de papier couché.

- poids de la couche pigmentaire          : selon le protocole indiqué ci-après
- épaisseur (mm)          : NF Q 03-016

- porosité à l'air des feuilles de papier couché (GURLEY)          : ISO 5636/5
- absorption d'eau ou Cobb 3 minutes (g/m2)          : NF Q 03-014
- degré de blancheur obtenu par le facteur de réflectance diffuse dans le bleu (longueur d'onde à 457 nm) des papiers pour apprécier l'un des éléments les plus importants liés à leur blancheur          : NF Q 03-039
- degré de jaune          : donné par l'appareil de mesure ELREPHO DATACOLOR

- réaction au feu.

Le test de réaction au feu a été réalisé dans les conditions indiquées dans l'arrêté du 30/06/83 portant classification des matériaux selon leur réaction au feu et définition des méthodes d'essai, tel que modifié le 12/06/90, conformément à la norme ISO 834. 1975 (F).

Détermination du poids de couche pigmentaire déposé (grammage sec de couche par m2)

1/ Détermination du taux de cendres à 800°C de la sauce de couchage sèche.

**a) Séchage de la sauce de couchage**

- le séchage de la sauce pigmentaire est effectué dans une étuve ventilée dont la température est fixée à 55°C.
- la sauce est étalée dans un verre de montre et le séchage poursuivi jusqu'à l'obtention d'un poids constant.
- la durée du séchage est fixée à 24 h pour un échantillon de 10g.

**b) Calcination de la sauce sèche**
Un échantillon de sauce sèche (prélèvement homogène) est soigneusement pesé puis calciné jusqu'à poids constant dans un four à moufle dont la température est fixée à 800°C ; la durée de calcination est généralement de 2 heures.
**c) Taux de cendres de la sauce**

- si $m_0$ est la masse de la sauce sèche,
- si $M_1$ est la masse des cendres après calcination, le taux de cendres de la sauce est :

$$t\% = \frac{m_1}{m_0} \times 100$$

2/ Détermination du poids de couche déposé.

**a) Cendres à 800°C du papier support et du papier couché**

Des échantillons sont découpés dans le papier support (avant couchage) et le papier couché à l'aide d'une forme 10 cm x 10 cm.

Les éprouvettes (10 cm x 10 cm) ainsi découpées sont calcinées dans un four à moufle jusqu'à l'obtention d'un poids constant qui sera mesuré de façon précise (balance de pression).

si $m_s$ est la masse des cendres d'une éprouvette support (10 cm x 10 cm),

si $m_c$ est la masse des cendres d'une éprouvette du papier couché (10 cm x 10 cm),

La masse des cendres dues à la couche pigmentaire est:

$$mC_p = m_c - m_s$$

les échantillons ayant tous une surface de $10^{-2}m^2$, le grammage par $m^2$ des cendres de la couche pigmentaire est :

$$Cp = mCp \cdot 100 \text{ en g/m}^2$$

**b) Poids de couche déposé**

Connaissant Cp, le poids par $m^2$ des cendres dues à la couche pigmentaire et le taux de cendres de la sauce de couchage, on calcule :

le poids de couche déposé sec :

$$pdC = Cp \cdot \frac{100}{t\%} \text{ en g/m}^2$$

EXEMPLES 1 A 13

Pour des raisons pratiques, les divers papiers et sauces de couchage employés sont désignés par une référence et décrits dans les tableaux I et II suivants :

TABLEAU I

| Référence du papier | Composition mesurée suivant la norme NF Q 03-001 | Degré de blancheur | Degré de jaune | Porosité Gurley (s) | Grammage (g/m²) |
|---|---|---|---|---|---|
| **P1** | - 0 % de fibres chimiques blanchies<br>- à base de vieux cartons et papiers de qualité KRAFT | 23,6 | 42,5 | 78,9 | 198,8 |

(suite)

| Référence du papier | Composition mesurée suivant la norme NF Q 03-001 | Degré de blancheur | Degré de jaune | Porosité Gurley (s) | Grammage (g/m$^2$) |
|---|---|---|---|---|---|
| **P2** | - de l'ordre de 10 % de fibres cellulosiques chimiques blanchies<br>- de l'ordre de 90 % de pâte chimique thermomécanique | 27,6 | 25,7 | 47 | 260,9 |
| **P3** | - au plus 29 % de fibres cellulosiques chimiques blanchies<br>- de l'ordre de 70 % de pâte chimique thermomécanique<br>- le reste est constitué d'une charge | 35,8 | 16,1 | 60 | 246,6 |
| **P4** | - de l'ordre de 60 à 65 % de fibres cellulosiques chimiques blanchies<br>- de l'ordre de 25 % de pâte chimique thermomécanique<br>- de l'ordre de 10 à 15 % d'une charge | 47,7 | 18,93 | 66 | 287,9 |
| **P5** | Jet supérieur obtenu à partir de 65 % de fibres cellulosiques chimiques et blanchies et de 35 % de talc. | 64,9 | 4,08 | 44 | 225,8 |

Les fibres chimiques blanchies entrant dans la composition fibreuse de P2, P3, P4 et P5 proviennent de kraft blanchi résineux et/ou de kraft blanchi feuillus.

Les sauces de couchage sont fabriquées au moyen d'un disperseur puis filtrées afin de séparer les agglomérats non dispersés.

Les compositions et les caractéristiques des sauces employées sont reportées dans le tableau II suivant :

TABLEAU II

| Référence de la sauce | Composition de la sauce | Caractéristiques de la sauce |
|---|---|---|
| **S1** | Charge (% en poids de la formule sèche)<br>TiO2 (à 100 %d'E.S.): 27,2<br>Kaolin (à 66,5 % d'E.S.): 36,87<br>Mica (à 100 % d'E.S.): 2,4<br>Silicate d'aluminium : 19,6<br><br>Liant (% en poids de la formule sèche)<br>Acétate de polyvinyle : 11,27 (à 50 % d'E.S.)<br><br>Adjuvants (% en poids de la formule sèche)<br>HPMC (1): 0,3<br>Dispersant : 0,26<br>Antimousse (3) : 0,4 % (6)<br>Ethylène glycol : 0,49<br>Héxylène glycol: 0.49 | 58 % d'extrait sec à 23°C<br>- Viscosité : 5100 (broche n°6, à 100 tr/min.) |
| **S2** | Charge (% en poids de la formule sèche)<br>$CaSO_4, 2H_2O$ en aiguilles de longueur comprise entre 3 et 5 $\mu$m (à 100 % d'E.S.): 85<br><br>Liant (% en poids de la formule sèche)<br>Copolymère styrène-butadiène ( à 50 % d'E.S.) : 10,3<br><br>Adjuvants (% en poids de la formule sèche)<br>NaOH (à 100 % d'E.S.) : 0,2<br>CMC (5)(à 17 % d'E.S.) : 1,7<br>Dispersant (2) (à 40 % d'E.S.) : 1,2<br>Antimousse (3): 0,1 % (6) :<br>Insolubilisant (4) (à 40 % d'E.S.) : 0,6<br>$NH_4$ Cl (à 40 % d'E.S.): 0,05 | 63,6 % d'extrait sec à 22°C<br>- pH : 8,6<br>- viscosité : 1 100 mPa.s |
| (1) HPMC désigne l'hydroxypropylméthylcellulose<br>(2) il est à base d'un polyacrylate de sodium commercialisé sous la dénomination COATEX GX.<br>(3) il est à base d'hydrocarbure et d'un émulsifiant non ionique.<br>(4) il est à base d'un produit de condensation urée-formol modifié.<br>(5) CMC désigne la carboxyméthylcellulose.<br>(6) % rapporté à la formule humide. | | |

Après une dilution appropriée permettant le déposer le poids de couche recherché avec le système de dépose utilisé, les sauces S1 et S2 sont couchées sur les papiers P1, P2, P3, P4 et P5. Les couchages sont effectués au laboratoire au moyen d'un système d'application automatique à barre, à vitesse et pression contrôlées.

Les caractéristiques des papiers couchés obtenus sont données dans les tableaux III, IV et V suivants :

TABLEAU III

| N° exemple | Réf. papiers et sauces de couchage | Grammage ($g/m^2$) | Degré de blancheur | Degré de jaune | Cobb (50") ($g/m^2$) | Poids de couche pigmentaire ($g/m^2$) | Perméabilité Gurley (1) (s) | Rugosité Bendtsen (1) (ml/mm) |
|---|---|---|---|---|---|---|---|---|
| | P1 | 198,8+/-0,6 | 23,6 | 42,5 | 23,3 | 0 | 78,9 | 857 |

(suite)

| N° exemple | Réf. papiers et sauces de couchage | Grammage (g/m$^2$) | Degré de blancheur | Degré de jaune | Cobb (50") (g/m$^2$) | Poids de couche pigmentaire (g/m$^2$) | Perméabilité Gurley (1) (s) | Rugosité Bendtsen (1) (ml/mm) |
|---|---|---|---|---|---|---|---|---|
| 1 | P1-S1 (à 40 % d'extrait sec) | 209,9 | 51,3 | 11,54 | | 7 | 76,4 | 867 |
| 2 | 2 P1-S2 (à 45 % d'extrait sec) | 205,8 | 45,3 | 15,92 | | 6 | 91,9 | 667 |
| 3 | P1-S2 (à 55 % d'extrait sec) | 213,4 | 68,6 | 1,17 | | 12 | 138 | 700 |
| | P5 | 225,8+/-2,38 | 64,9 | 4,08 | 52,4 | 0 | 44,5 | 902 |
| 4 | P5-S1 (à 35 % d'extrait sec) | 227 | 77,1 | 2,11 | | 5 | 51,3 | 1 020 |
| 5 | P5-S2 (à 55 % d'extrait sec) | 236,3 | 72,6 | 3,17 | | 13 | 107 | 750 |
| 6 | P5-S2 (à 45 % d'extrait sec) | 228,5 | 71,1 | 3,36 | | 7 | 65,3 | 877 |
| | P4 | 287,9+/-12,6 | 47,7 | 18,93 | 67,2 | 0 | 66 | 1 100 |
| 7 | P4-S1 (à 35 % d'extrait sec) | 294,8 | 69,3 | 3,72 | | 7 | 154 | 817 |
| 8 | P4-S2 (à 55 % d'extrait sec) | 281,4 | 65.4 | 7,1 | | 14 | 269 | 1 133 |
| 9 | P4-S2 (à 55 % d'extrait sec) | 281,6 | 63,0 | 8,42 | | 6 | 240 | 873 |
| | P3 | 246,6+/-1,2 | 35,8 | 16,1 | 53,7 | 0 | 60 | 1 677 |
| 10 | P3-S1 (à 35 % d'extrait sec) | 254,5 | 62,6 | 0,28 | | 7 | 151 | 927 |

(suite)

| N° exemple | Réf. papiers et sauces de couchage | Grammage (g/m$^2$) | Degré de blancheur | Degré de jaune | Cobb (50") (g/m$^2$) | Poids de couche pigmentaire (g/m$^2$) | Perméabilité Gurley (1) (s) | Rugosité Bendtsen (1) (ml/mm) |
|---|---|---|---|---|---|---|---|---|
| 11 | P3-S2 (à 55 % d'extrait sec) | 264,4 | 54,4 | 5 | | 8 | 312 | 893 |
| | P2 | 260,9+/-1,4 | 27,6 | 25,7 | 53,3 | 0 | 47 | 1 400 |
| 12 | P2-S1 (à 35 % d'extrait sec) | 270 | 64,5 | -0,13 | | 7 | 93,3 | 977 |
| 13 | P2-S2 (à 55 % d'extrait sec) | 269,8 | 51,8 | 6,19 | | 8 | 244 | 1 167 |
| (1) Ces mesures sont réalisées sur le papier couché (ou non) prêt à être utilisé pour la formation de plaques de plâtre. | | | | | | | | |

TABLEAU IV

| Degré de blancheur en fonction de l'exposition au soleil | | | | | | | | | | | | | |
|---|---|---|---|---|---|---|---|---|---|---|---|---|---|
| N° ex. | 1 | 2 | 3 | 4 | 5 | 6 | 7 | 8 | 9 | 10 | 11 | 12 | 13 |
| hres d'exposition | | | | | | | | | | | | | |
| 0 | 68,6 | 45,3 | 51,3 | 77,1 | 72,6 | 71,1 | 69,3 | 65,4 | 63 | 62,6 | 54,4 | 64,5 | 51,8 |
| 14 | 66,3 | 46 | 50,9 | 75,9 | 70,1 | 68,1 | 69,9 | 65,2 | 63,1 | 63,7 | 53,2 | 64,1 | 49,4 |
| 24 | 66,7 | 45,3 | 50,7 | 76,1 | 69,6 | 67,7 | 70,4 | 65,3 | 63,1 | 63,3 | 53,5 | 63,8 | 50,9 |
| 34 | 66,6 | 45,6 | 50,8 | 75,6 | 68,7 | 67 | 70,3 | 64,5 | 62,8 | 63,6 | 53,8 | 63,7 | 50,1 |
| 44 | 66,4 | 45,4 | 50,6 | 75,2 | 68 | 66,2 | 70,1 | 64,5 | 62,6 | 63,4 | 54 | 63,4 | 49,6 |
| 54 | 66,5 | 45,4 | 50,7 | 74,8 | 67,3 | 65,5 | 70,1 | 64 | 61,7 | 63,2 | 53,5 | 63,4 | 49,6 |
| 64 | 66,4 | 45 | 50,6 | 74,7 | 67,1 | 65,3 | 70,2 | 63,6 | 61,9 | 62,9 | 53,6 | 63,5 | 49,3 |
| 74 | 66,5 | 45,4 | 50,4 | 74,5 | 66,6 | 64,9 | 70,3 | 63,6 | 61,4 | 63 | 53,8 | 63,4 | 49,9 |

TABLEAU V

| | Degré de jaune en fonction de l'exposition au soleil | | | | | | | |
|---|---|---|---|---|---|---|---|---|
| | Heures d'exposition | | | | | | | |
| N° ex. | 0 | 14 | 24 | 34 | 44 | 54 | 64 | 74 |
| 1 | 1,17 | 2,28 | 2,26 | 2,4 | 2,8 | 3,02 | 3,19 | 3,54 |
| 2 | 15,92 | 17 | 18,78 | 18,96 | 19,77 | 20,05 | 20,83 | 21,13 |
| 3 | 11,54 | 13,56 | 14,49 | 14,91 | 15,67 | 15,9 | 16,51 | 17,24 |
| 4 | 2,11 | 3,03 | 3,03 | 3,15 | 3,81 | 4,18 | 4,22 | 4,61 |
| 5 | 3,17 | 6,7 | 7,27 | 8,18 | 9,2 | 9,72 | 10,25 | 11,2 |
| 6 | 3,36 | 7,44 | 8,03 | 8,9 | 9,9 | 10,61 | 10,97 | 11,9 |
| 7 | 3,72 | 3,78 | 3,54 | 3,64 | 4,03 | 4,16 | 4,26 | 4,46 |
| 8 | 7,4 | 8,52 | 8,91 | 9,77 | 10,42 | 10,97 | 11,74 | 12,43 |
| 9 | 8,42 | 9,93 | 10,2 | 10,86 | 11,71 | 12,37 | 12,81 | 13,73 |
| 10 | 0,28 | 0,58 | 0,66 | 0,72 | 1,2 | 1,53 | 1,68 | 1,79 |
| 11 | 5 | 7,62 | 7,94 | 8,12 | 8,74 | 9,32 | 9,66 | 9,92 |
| 12 | -0,13 | 0,43 | 0,59 | 0,72 | 1,24 | 1,39 | 1,61 | 1,89 |
| 13 | 6,19 | 9,72 | 9,56 | 10,37 | 11,42 | 11,82 | 12,21 | 12,25 |

Sur les papiers P1, P2, P3 et P4, dont l'état de la surface est relativement rugueux, la qualité de couchage est insatisfaisante, voire tout à fait médiocre pour P1. La teinte blanche recherchée est en effet très irrégulièrement répartie et ressort sous la forme de tâches blanches très contrastées par rapport au reste du papier qui est plutôt gris.

Seule la sauce S1 qui comprend une charge très opacifiante (TiO2) parvient à masquer ces défauts à la condition le réaliser des poids de couches pigmentaires plus élevés que ceux indiqués dans les exemples 1, 7, 10 et 12 : dans ce cas, on observe alors une augmentation des valeurs correspondant à la porosité Gurley traduisant une fermeture d'une part importante des pores du papier pouvant être préjudiciable à la fabrication des plaques de plâtre. Par contre, le papier P5, dont l'état de surface est bon (faible rugosité et homogénéité de répartition de la masse fibreuse), fait apparaître après couchage une surface d'une teinte blanche uniformément répartie : ces qualités résultent notamment de la bonne répartition de la sauce et du fait que la couleur de la sauce est relativement proche de celle de la surface à revêtir.

A partir des résultats obtenus pour les exemples 1 à 13, il faut noter que, si on compare les papiers couchés selon l'invention, c'est-à-dire l'exemple 5, et les papiers décrits dans la demande internationale WO-A-88/03871 sur lesquels on applique une sauce à base de TiO2 au moyen d'un système favorisant l'enterrement de la sauce (calandre de remouillage), pour un poids de couche pigmentaire identique, le meilleur degré de blancheur initial est obtenu avec un papier comprenant un jet supérieur de couleur blanche et dont l'état de surface est homogène et régulier, un tel papier étant revêtu au moyen d'un système de dépose privilégiant le couchage en surface (système à rouleaux ou système à lame d'air) d'une couche pigmentaire à base de sulfate de calcium dihydraté, et ceci sans fermeture importante de la porosité du papier couché.

Quand ils sont soumis à un ensoleillement identique, les papiers couchés revêtus à l'aide d'une sauce pigmentaire de TiO2 restent stables tandis que ceux revêtus d'une sauce pigmentaire de sulfate de calcium dihydraté vieillissent lentement (comparativement au vieillissement des mêmes papiers non couchés). Ce résultat aurait été tout à fait différent si la sauce pigmentaire à base de TiO2 avait été appliquée à l'aide d'un système de type calandre de remouillage comme dans la demande internationale WO-A-88/03871. En pénétrant dans le papier, l'effet protecteur de la couche pigmentaire diminue et le phénomène de jaunissement aurait été rapidement visible.

Les papiers couchés comprenant du TiO2 se marquent au moindre frottement avec certains outils métalliques alors que les papiers couchés comprenant du CaSO4, 2H$_2$O ne présentent pas ce défaut.

EXEMPLE 14

Sur un papier de composition identique à celle du papier référencé P5 ci-dessus, on dépose industriellement une couche pigmentaire de sorte à réaliser une dépose de 14 à 20 g/m² à l'aide d'un système de dépose à lame d'air avec une vitesse de 150 m/min.
La composition de la sauce de couchage correspond à la sauce S2 indiquée dans les exemples précédents.
On notera que le gypse $CaSO_4,2H_2O$ a une action importante sur la porosité du papier couché. En effet, il minimise la fermeture du papier de façon notable par rapport aux charges classiques.
Des bobines de papier référencées 1 à 3 ont été recouvertes de la sauce de couchage précitée : ses caractéristiques sont les suivantes :

-    extrait sec : 47,2 % en poids
-    viscosité Brookfield à 100 tr/min. : 120 mPa.s

(après 5 minutes d'agitation à 1 000 tr/min à 21°C - Broche RV n°2)
Les bobines de papier référencées 4 à 6, dont 5 et 6 ne sont pas selon l'invention, ont été recouvertes de la sauce de couchage précitée : ses caractéristiques sont les suivantes :

-    extrait sec : 43,4 %
-    viscosité Brookfield à 100 tr/min : 84 mPa.s

(après 5 minutes à 1 000 tr/min, à 21°C - Broche n°2)
Les caractéristiques des papiers couchés obtenus sont reportés dans le tableau VI suivant :

**TABLEAU VI**

| | Papier non couché | Papier couché | | | | | |
|---|---|---|---|---|---|---|---|
| | | bobine 1 | bobine 2 | bobine 3 | bobine 4 | bobine 5 | bobine 6 |
| grammage écart type (g/m²) (NF Q 03-019) | 227,3 | 236,7 | 244,2 | 246,3 | 243,0 | 241,5 | 242,3 |
| épaisseur (mm) (NF Q 03-016) | | | 0,360 | | 0,356 | | |
| poids de couche (g/m²) ** | 0 | 15,3 | 19,3 | 19,9 | 18,0 | 14,3 | 15,9 |
| porosité Gurley (s) (NF ISO 5636/5) | 39 | 102 | 121 | 133 | 102 | 89 | 76 |
| blancheur | 64,0 | 75,5 | 76,6 | 77,9 | 76,2 | 75,2 | 75,4 |
| indice de jaune * | 4,27 | 2,70 | 2,37 | 2,24 | 2,67 | 2,37 | 2,49 |
| Cobb (g) (NF Q 03-014) côté supérieur côté plâtre | 52 56 | | 63,2 76,3 | | 66,2 83,5 | | |
| rupture (N) sens travers sens marche (NF Q 03-004) | 76 207 | | 65 196 | | 73 203 | | |
| I.B.T. (résistance interplis) (J/m²) *** | 85 | | 90 | | 86 | | |

(suite)

| | Papier non couché | Papier couché | | | | | |
|---|---|---|---|---|---|---|---|
| | | bobine 1 | bobine 2 | bobine 3 | bobine 4 | bobine 5 | bobine 6 |
| Allongement humide (%) (NF Q 03-063) | | | 2,32 | | 2,21 | | |

| |
|---|
| * Elrepho datacolor 2000-UV=0%-Etalon DIN 5033 absolu. |
| ** Au four à moufle à 800°C. |
| *** La résistance interplis est mesurée selon la procédure TAPI-UM-403. |

On remarque que les papiers couchés décrits dans cet exemple remplissent les caractéristiques habituelles des papiers pour plaques de plâtre.

Par ailleurs, les plaques de plâtre recouvertes des papiers couchés décrits dans cet exemple ne présentent pas, pour l'utilisateur, de différences d'emploi, de mise en place et d'usage, comparativement aux plaques de plâtre traditionnelles recouvertes de papier non couché.

Cependant, lors de l'utilisation des plaques, et plus particulièrement lors de la pose des joints de plaques de plâtre, on peut noter, dans certains cas, des amorces de délamination. Ceci résulte du remouillage important, dans certaines utilisations, qui s'accompagne de la diminution de la cohésion des jets par diminution de la résistance interplis en milieu humide.

EXEMPLES 15 A 16

Sur un papier de porosité Gurley égale à 56 s, de 230 g/m$^2$, de rugosité Bendtsen égale à 1 100, dont la blancheur de la face supérieure est égale à 55 et dont le jet supérieur est obtenu à partir de vieux papiers de qualité blanche groupe C conformes à la norme CEPAC 1990, et en particulier de rognures périodiques claires (classe C1), de bois blanc vierge (classe C11), de cassés blanc journal (classe C12) et de rognures blanches (classes C14 à C17), on dépose une sauce de couchage à l'aide d'un système d'enduction de type rouleaux.

Les sauces de couchage utilisées sont les suivantes (les proportions sont données en parties en poids de la formule en sec) :

Sauce S3.

Composition :

- NaOH : 0,25
- Carboxyméthylcellulose : 2
- Dispersant : 0,2
- CaSO$_4$,2H$_2$O broyé, formé de particules inférieures à 2 $\mu$m : 100
- Agent anti-mousse : 0,1
- Latex styrène-butadiène : 12
- Agent insolubilisant à base d'un produit de condensation urée-formol modifié : 0,7
- NH$_4$Cl : 0,12

| Viscosités Brookfield à 100 tr/min. | 450 mPa.s |
|---|---|
| contrôlées lors de l'utilisation industrielle Extrait sec (en % en poids) | 63 |

Sauce S4.

Composition :

- NaOH : 0,1
- Carboxyméthylcellulose : 1,0
- Amidon : 16
- Dispersant : 0,2

- CaSO$_4$,2H$_2$O broyé, formé de particules inférieures à 2 $\mu$m       : 100
- Agent anti-mousse       : 0,1
- Agent insolubilisant à base d'un produit de condensation urée-formol modifié       : 0,7
- NH$_4$ Cl       : 0,06
- glyoxal       : 0,5

| Viscosités Brookfield à 100 tr/min. | 490 mPa.s |
|---|---|
| contrôlées lors de l'utilisation industrielle Extrait sec (en % en poids) | 53 |

Le tableau VII ci-dessous indique les résultats expérimentaux obtenus à partir du papier sur lequel S3 est appliquée (exemple 15) et du papier sur lequel S4 est appliquée (exemple 16). Le papier 16a seulement est selon l'invention.

TABLEAU VII

| Références de l'exemple | Grammage du papier couché (g/m$^2$) | Poids de la couche pigmentaire (g/m$^2$) | Porosité Gurley (s) | Degré de blancheur initial | Indice de jaune initial | Rugosité Bendtsen |
|---|---|---|---|---|---|---|
| Papier non couché | 228 | 0 | 70 | 55,4 | 5,6 | 1100 |
| 15 a | 231 | 11,1 | 95 | 63,1 | 3,2 | 950 |
| 15 b | 237 | 14,6 | 153 | 64,2 | 3,2 | 1000 |
| 15 c | 241 | 17,1 | 210 | 65,6 | 2,9 | 1100 |
| 16 a | 234 | 10,7 | 105 | 64,1 | 3,5 | 1250 |
| 16 b | 238 | 16,7 | 170 | 68,3 | 2,7 | 1100 |

Tenue du papier peint

Des mini-plaques de plâtre de 30 cm x 30 cm, sur 13 mm d'épaisseur ont été fabriquées avec les papiers couchés 16 b, 15 c, 15 b, 15 a et 16 a. Le coeur des mini-plaques est à base de plâtre et de divers adjuvants utiles pour faciliter leur fabrication (accélérateur de prise, etc.).

Les plaques de plâtre ne sont pas encollées, le papier l'est avec une colle à base de méthylcellulose commercialisée par HENKEL sous la dénomination METYLAN CL.

L'application du papier peint se fait sans difficulté. Les mi-plaques décorées du papier sont séchées 48 heures en étuve ventilée à 45°C. Le décollement (après humidification du papier peint avec une eau à 50°C et un agent mouillant) se fait sans arrachement du papier de la plaque de plâtre ni de sa couche pigmentaire.

En outre, les résultats des essais :

- d'arrachement par traction des plots collés sur ces papiers couchés,
- d'arrachement de bandes à joint,
- de flexions sur les joints traités à l'enduit formés par l'assemblage de deux plaques de plâtre,

sont équivalents à ceux obtenus avec les plaques de plâtre cartonnées.

Réaction au feu

Le classement du matériau à la suite des essais par rayonnement s'appuie sur les mesures suivantes : délai d'inflammation, somme des longueurs maximales de flamme, durée de combustion.

Dans le cas particulier de la plaque de plâtre nous avons considéré :

A- Le délai d'inflammation **ti** en secondes qui est la durée écoulée entre la mise en place de l'éprouvette dans la cabine et le temps d'inflammation. En l'absence d'inflammation **ti** est considéré comme infini.

B- **h** est la longueur maximale exprimée en cm, atteinte par les flammes au cours de chaque période de 30 secondes, durant chaque épreuve.

Σ **h** est la somme des valeurs de **h** pendant la durée de chaque épreuve.

C- La durée totale de combustion vive Δ **T** de chaque épreuve, exprimée en secondes, est la durée totale de présence de flammes en une ou plusieurs périodes supérieures à 5 secondes.

$\Delta T = e-ti$

ti = délai d'inflammation

e = temps d'extinction

D- L'indice de classement Σ est la moyenne arithmétique des indices **q** obtenus à l'issue de chacune des épreuves par la formule suivante :

$$q = \frac{100\ \Sigma\ h}{ti\sqrt{\Delta T}} \text{ et } \bar{q} = \frac{\Sigma\ g}{n}$$

n étant le nombre d'épreuves.

Une plaque de plâtre est classée M1 lorsque l'indice de classement ainsi défini est inférieur à 2,5. Elle est classée M2 lorsque cet indice est compris entre 2,5 et 15.

Sur la base du protocole de mesure de l'arrêté du 30/06/83 tel que modifié le 12/6/90 et de la norme ISO 834-1975(F), le classement des mini-plaques incorporant un papier couché conforme à l'invention selon leur réaction au feu est donné dans le tableau VIII suivant :

TABLEAU VIII

| Réf. de l'essai | $\bar{q}$ et indice de classement Σ |
|---|---|
| 15 a | 2,35-classe M1 |
| 15 b | 1,79 - classe M1 |
| 15 c | 2,08 - classe M1 |
| 16 a | 1,55 - classe M1 |
| 16 b | 2,89 - classe M2 |

EXEMPLES 17 A 20

EXEMPLE 17

Sur un papier pour plaque de plâtre identique à celui utilisé dans les essais 15 et 16, on dépose une sauce de couchage S5 similaire à la sauce S3, les seules différences étant les suivantes :

- extrait sec (en % en poids)          : 55
- mode de dépose d'application automatique à la barre          : système de type laboratoire
- poids de couche pigmentaire déposé          : 12 g/m$^2$

EXEMPLE 18

Cet exemple diffère de l'exemple 17 seulement Dar le fait que, à la sauce pigmentaire S5, on ajoute un agent ignifugeant, en l'occurrence un sulfamate organique commercialisé sous la dénomination ALBAPLAS 695, de sorte à déposer 1 g de cet agent par m$^2$ de papier.

EP 0 521 804 B2

EXEMPLE 19

Cet exemple diffère de l'exemple 17 seulement par le fait que, à la sauce pigmentaire S5, on ajoute un agent ignifugeant commercialisé sous la dénomination ALBAPLAS 695 à raison de 2 g de cet agent par m² de papier.

EXEMPLE 20

Cet exemple diffère de l'exemple 17 seulement par le fait que, à la sauce pigmentaire S5, on ajoute un agent ignifugeant commercialisé sous la dénomination ALBAPLAS 695 à raison de 4 g par m² de papier.

Les résultats du test de réaction au feu de ces mini-plaques réalisées avec ces papiers revêtus d'une sauce renfermant un agent ignifugeant (exemples 17 à 20) et du témoin (exemple 17) sont donnés dans le tableau IX suivant :

TABLEAU IX

| Référence de l'essai | $\overline{q}$ et indice de classement $\Sigma$ |
|---|---|
| 17 | 3,49 - classe M2 |
| 18 | 0,98 - classe M1 |
| 19 | 1,73 - classe M1 |
| 20 | 0 (pas d'inflammation) classe M1 |

EXEMPLES 21 ET 22

Les papiers employés ont la même composition que le papier P5 décrit dans les exemples 1 à 13 ; la seule différence entre les deux papiers tient dans le milieu de collage qui est :

- acide pour le papier testé dans l'exemple 21 (un collage acide est également employé pour préparer les papiers testés dans les exemples 15 à 26) ;
- neutre pour le papier testé dans l'exemple 22.

Sur ces papiers, on dépose industriellement une couche pigmentaire d'extrait sec égal à 53,4 % afin de réaliser, à l'aide d'un système de dépose à lame d'air :

- Exemple 21 une dépose de 12 à 14 g/m²
- Exemple 22 : une dépose de l'ordre de 25 g/m².

Le poids de la couche pigmentaire constitue la seule différence entre les exemples 21 et 22.
La composition de la sauce de couchage employée est la suivante (sauf précisions contraires, les proportions sont données en pourcentage en poids en sec pour 100 % pondéral en sec de carbonate de calcium) :

- Carbonate de calcium : 100 % en poids en sec de la formule sèche
- Copolymère styrène-butadiène à 50 % d'extrait sec : 12 %
- Soude : 0, 25 %
- Carboxyméthylcellulose : 0,5 %
- Dispersant à base d'un polyacrylate de sodium commercialisé sous la dénomination COATEX GX : 0,1 %
- Anti-mousse à base d'hydrocarbure et d'un émulsifiant non ionique : 0,1 % pondéral rapporté à la formule humide
- Insolubilisant à base d'un produit de condensation urée-formol modifié : 0,7 %
- $NH_4$ Cl : 0,06 %
- Silicone en tant qu'agent hydrofugeant : 1 % pondéral rapporté à la formule humide

Les caractéristiques des papiers couchés obtenus sont reportées dans le tableau suivant :

|  | Exemple 21 | | Exemple 22 | |
|---|---|---|---|---|
|  | Papier non couché | Papier couché | Papier non couché | Papier couché |
| Grammage écart type (g/m$^2$) (NF Q 03-019) | 227 +/- 5 | 248 +/-5 | 234 +/- 5 | 244 +/- 5 |
| Poids de couche (g/m$^2$) | 0 | 13,8 | 0 | 14,5 |
| Porosité Gurley (s) (NF ISO 5636/5) | 60 | 103 | 25 | 101 |
| Blancheur (NF Q 03-039) | 66,4 | 70,1 | 52,3 | 74,5 |
| COBB (NF Q 03-014 . TOP . BOTTOM) | 54 (1) 51 (1) | 28 (2) 32 (2) | 34 (1) 60 (1) | 33 (2) 37 (2) |
| I.B.T. résistance interplis en J/m2 en milieu humide Procédure TAPI-UM-403 | 63 | 95 | 122 | 176 |
| Rugosité BENDTSEN (NF Q 03-049) |  | 1 391 |  | 1 008 |
| (1) mesure effectuée à 3'50" (2) mesure effectuée à 3'23" | | | | |

EXEMPLE 23 : Test de tenue à l'humidité

Dans les conditions opératoires de couchage décrites dans l'exemple 14, on traite le papier référencé P5 dans les exemples 1 à 13 de la manière suivante:

a) le papier P5 est recouvert d'une couche pigmentaire de la sauce S2 : le poids de couche est de 16,0 g/m$^2$ ; ici le papier et la sauce ne sont pas traités avec un agent hydrofugeant ;

b) le papier P5 est prétraité contre la reprise d'eau à l'aide d'un film de silicone, puis recouvert d'une couche pigmentaire de la sauce S2. Le poids total de couche est de 14,8 g/m$^2$ incluant la silicone à raison de 100 mg/m$^2$ environ de produit commercial ;

c) le papier P5 est recouvert d'une couche pigmentaire d'une sauce qui diffère de S2 uniquement par le fait qu'elle contient de la silicone à raison de 1 % pondéral, rapporté à la formule humide. Le poids total de la couche pigmentaire est alors de 15,1 g/m$^2$ ;

d) le papier P5 est prétraité contre la reprise d'eau, à l'aide d'un film de silicone, puis recouvert d'une couche pigmentaire de la sauce employée pour réaliser l'essai 23(c) décrit ci-dessus. Le poids total de la couche pigmentaire est alors de 13,4 g/m$^2$.

Ces quatre papiers couchés sont employés pour fabriquer des plaques de plâtre cartonnées : on notera que l'utilisation de ces quatre papiers couchés n'influe pas le procédé de fabrication des plaques de plâtre qui peut dès lors être conduit selon des conditions opératoires classiques.

Lors du montage d'une cloison, on a observé une bonne tenue de ces quatre papiers couchés, en particulier à l'occasion des frottements de la spatule lors du remplissage des joints formés entre les plaques.

En déposant une goutte d'eau sur ces quatre papiers couchés, on observe une pénétration difficile pour les papiers couchés (c) et (d).

Egalement, on a observé que la résistance au frottement avec un appui modéré, en frottant par exemple avec le doigt des papiers humides, est très nettement supérieure pour les papiers (c) et (d). L'amélioration très nette de la tenue à l'humidité des papiers couchés à l'aide d'une sauce contenant un agent hydrofugeant a également été observée par la demanderesse à l'occasion de plusieurs autres essais.

**Revendications**

1. Plaque de plâtre comportant un corps de plâtre revêtu d'une feuille de papier de parement, elle-même revêtue d'une couche pigmentaire de couchage à base d'au moins une charge minérale de couleur claire et comportant au moins un liant, **caractérisé en ce que** le jet supérieur de la feuille de papier, sur lequel est déposée ladite couche pigmentaire, présente avant couchage un degré de blancheur supérieur à 50, par exemple supérieur à 60 (NNF Q 03-039), et est à base d'au moins une charge minérale de couleur claire, et de fibres cellulosiques neuves ou de récupération, blanchies, majoritairement chimiques, **en ce que** la charge minérale de la couche pigmentaire est de nature chimique identique ou différente à celle composant ledit jet supérieur et le grammage de la couche pigmentaire déposée est compris entre 8 et 30 g/m$^2$ (NFQ 03-019) et **en ce que** la feuille de papier ainsi couchée revêtissant à titre de parement la plaque de plâtre, présente une perméabilité à l'air (Porosité GURLEY: NFQ 03-061) avant qu'elle ne subisse une opération de séchage dans des conditions de températures similaires à celles utilisées lors du séchage de la plaque de plâtre de 100 s à 150 s.

2. Plaque selon la revendication 1, **caractérisée en ce que** la couche pigmentaire se trouve majoritairement sur la surface du jet supérieur de la feuille de papier.

3. Plaque selon la revendication 1, **caractérisée en ce que** la feuille de papier revêtissant ladite plaque, est obtenue à partir d'un papier dont la surface du jet supérieur présente une rugosité Bendsten inférieure à 1500 Bendsten, par exemple inférieure à 1000 Bendsten (NFQ 03-049).

4. Plaque selon la revendication 1, **caractérisée en ce que** le jet supérieur de la feuille de papier revêtissant ladite plaque, est obtenu à partir d'au moins 65 % en poids de fibres cellulosiques blanchies et chimiques.

5. Plaque selon la revendication 1, **caractérisée en ce que** la teneur en pâte mécanique, et/ou en pâte mi-chimique, et/ou en pâte chimique non blanchie, et/ou en pâte thermo-mécanique, utilisée pour préparer le jet supérieur, n'excède pas 30 % en poids.

6. Plaque selon la revendication 1, **caractérisée en ce que** le jet supérieur de la feuille de papier est obtenu en incorporant dans la préparation fibreuse de ladite feuille, des fibres cellulosiques blanchies recyclées.

7. Plaque selon la revendication 1, **caractérisée en ce que** la charge minérale est du sulfate de calcium dihydraté sous forme d'aiguilles, éventuellement en combinaison avec du carbonate de calcium et/ou des matières pulvérulentes d'origine minérale, inertes et blanches, par exemple du talc, du kaolin et du dioxyde titane.

8. Plaque selon la revendication 1, **caractérisée en ce que** le liant est choisi parmi les matières polymères synthétiques, par exemple les copolymères styrène-butadiène, les acétates de polyvinyle, et les polymères à base de monomères acryliques.

9. Plaque selon la revendication 1, **caractérisée en ce que** le liant est choisi parmi les matières polymères d'origine naturelle, par exemple amidon.

10. Plaque selon la revendication 1, **caractérisée en ce que** le liant est constitué d'un mélange de matières polymères synthétiques et de matières polymères d'origine naturelle.

11. Plaque selon la revendication 1, **caractérisée en ce que** le liant comprend au moins un additif choisi dans le groupe constitué par les agents fluidifiants basiques, les agents viscosifiants, les agents dispersants, les agents ignifugeants, les agents insolubilisants, les agents hydrofugeants pour limiter la cinétique de reprise d'eau du papier.

12. Plaque selon la revendication 1, **caractérisée en ce que** la couche pigmentaire est obtenue à partir d'une sauce pigmentaire dont la teneur en matières sèches est supérieure à 40 % en poids.

**Claims**

1. Plasterboard comprising a plaster core covered with a facing paper which is covered with a pigment layer of coating based on at least one light-coloured inorganic filler and comprising at least one binder, **characterized in that** the top ply of the paper sheet onto which the said pigment layer is applied, presents before coating a degree of brightness higher than 50, for instance higher than 60 (NNF Q 03-039), and is based on at least one light-coloured inorganic filler, and based on new or recovered, predominantly chemical, bleached cellulose fibres, **in that** the inorganic filler of the pigment layer is of a chemical nature which is identical with or different from that of which the said top ply consists and the weight of the deposited pigment layer is between 8 and 30 g/m$^2$ (NFQ 03-019) and **in that** the paper sheet covering the plasterboard as a facing, presents on air permeability (Gurley porosity: NFQ 03-061) before it undergoes a drying operation in temperature conditions similar to those employed during the drying of the plasterboard, from 100s to 150s.

2. Plasterboard according to claim 1 **characterized in that** the pigment layer is situated predominantly on the surface e of the top ply of the paper sheet.

3. Plasterboard according to claim 1 **characterized in that** the paper sheet covering said plasterboard, is obtained from a paper whose surface of the top ply presents a Bendtsen roughness lower than 1500 Bendtsen, for instance lower than 1000 Bendtsen (NFQ 03-049).

4. Plasterboard according to claim 1 **characterized in that** the top ply of the paper sheet covering said plasterboard is obtained from at least 65 % by weight of bleached and chemical cellulose fibres.

5. Plasterboard according to claim 1 **characterized in that** the content of mechanical pulp and/or of semichemical pulp, and/or of unbleached chemical pulp, and/or of thermomechanical pulp which is employed for preparing the top ply, does not exceed 30 % by weight.

6. Plasterboard according to claim 1 **characterized in that** the top ply of the paper sheet is obtained by the incorporation of recycled bleached cellulose fibres in the fibre preparation of said sheet.

7. Plasterboard according to claim 1 **characterized in that** the inorganic filler is calcium sulphate dehydrate in the form of needles, possibly in combination with calcium carbonate and/or inert and white pulverulent materials of mineral origin, for example talc, kaolin and titanium dioxide.

8. Plasterboard according to claim 1 **characterized in that** the binder is chosen from synthetic polymeric materials, for example styrenebutadiene copolymers, polyvinyl acetates and polymers based on acrylic monomers.

9. Plasterboard according to claim 1 **characterized in that** the binder is chosen from polymeric materials of natural origin, for example starch.

10. Plasterboard according to claim 1 **characterized in that** the binder consists of a mixture of synthetic polymeric materials and polymeric materials of natural origin.

11. Plasterboard according to claim 1 **characterized in that** the binder comprise sat least an an additive chosen in group consisting of basic fluidifying agents, thickening agents, dispersing agents, flame-retard agents, insolubilizing agents, waterproofing agents for limiting the kinetics of water uptake of the paper.

12. Plasterboard according to claim 1 **characterized in that** the pigment layer is obtained from a pigment slip whose solids content is higher than 40 % by weight.

**Patentansprüche**

1. Gipsplatte, umfassend einen Gipskörper, der mit einem Beschichtungspapier überzogen ist, das selbst mit einer Pigmentschichtbeschichtung auf der Grundlage von mindestens einem mineralischen Füllstoff von heller Farbe überzogen ist und mindestens ein Bindemittel umfasst, **dadurch gekennzeichnet, dass** die obere Faserstofflage des Papierbogens, auf die die Pigmentschicht aufgetragen ist, vor der Beschichtung einen Weißgrad von mehr als 50 aufweist, z.B. mehr als 60 (NNF Q 03-039), und auf zumindest einem mineralischen Füllstoff von heller Farbe und neuen oder wiedergewonnenen, gebleichten, hauptsächlich chemischen Cellulosefasern beruht, dadurch, dass der mineralische Füllstoff der Pigmentschicht eine chemische Beschaffenheit aufweist, die mit demjenigen, der die obere Faserstofflage aufbaut, identisch oder von diesem verschieden ist, wobei das Flächengewicht der aufgetragenen Pigmentschicht zwischen 8 und 30 g/m$^2$ (NFQ 03-019) liegt, und dadurch, dass das so beschichtete Papier, das als Beschichtung die Gipsplatte überzieht, eine Luftdurchlässigkeit (GURLEY-Porosität: NFQ 03-061) von 100 s bis 150 aufweist, bevor es einem Trocknungsgang unter den gleichen Temperaturbedingungen wie beim Trocknen der Gipsplatte unterworfen wird.

2. Platte nach Anspruch 1, **dadurch gekennzeichnet, dass** sich die Pigmentschicht hauptsächlich auf der Oberfläche der oberen Faserstofflage des Papiers befindet.

3. Platte nach Anspruch 1, **dadurch gekennzeichnet, dass** das Papier, das die Platte überzieht, aus einem Papier erhalten wird, bei dem die Oberfläche der oberen Faserstofflage eine Bendtsen-Rauigkeit von weniger als 1500 Bendtsen, z.B. weniger als 1000 Bendtsen (NFQ 03-049) aufweist.

4. Platte nach Anspruch 1, **dadurch gekennzeichnet, dass** die obere Faserschicht des Papiers, das die Platte überzieht, aus zumindest 65 Gew.-% an gebleichter und chemischen Cellulosefasern erhalten ist.

5. Platte nach Anspruch 1, **dadurch gekennzeichnet, dass** der Gehalt an mechanischem Holzstoff und/ oder Halbzellstoff und/oder ungebleichtem Zellstoff und/oder thermomechanischem Holzstoff, der zur Herstellung der oberen Faserschicht verwendet wird, 30 Gew.-% nicht überschreitet.

6. Platte nach Anspruch 1, **dadurch gekennzeichnet, dass** die obere Faserschicht des Papiers durch Zumischung von recycelten, gebleichten Cellulosefasern in die faserstoffhaltige Zubereitung des Papiers erhalten ist.

7. Platte nach Anspruch 1, **dadurch gekennzeichnet, dass** der mineralische Füllstoff Calciumsulfat-Dihydrat in Form von Nadeln ist, eventuell in Verbindung mit Calciumcarbonat und/oder miL inerten und weißen pulverförmigen Stoffen mineralischer Herkunft, wie z.B. Talk, Kaolin und Titandioxid.

8. Platte nach Anspruch 1, **dadurch gekennzeichnet, dass** das Bindemittel unter den synthetischen Polymerstoffen, z.B. den Styrol-Butadien-Copolymeren, Polyvinylacetaten und Polymeren auf der Basis von Acrylmonomeren ausgewählt ist.

9. Platte nach Anspruch 1, **dadurch gekennzeichnet, dass** das Bindemittel unter den Polymerstoffen natürlicher Herkunft, z.B. Stärke, ausgewählt ist.

10. Platte nach Anspruch 1, **dadurch gekennzeichnet, dass** das Bindemittel aus einem Gemisch aus synthetischen Polymerstoffen und Polymerstoffen natürlicher Herkunft zusammengesetzt ist.

11. Platte nach Anspruch 1, **dadurch gekennzeichnet, dass** das Bindemittel mindestens einen Zusatzstoff enthält, der aus der Gruppe gewählt wird, die aus den basischen Verflüssigungsmitteln, den Mitteln zum Zähermachen, den Dispersionsmitteln, den Flammenhemmstoffen, den Mitteln zum Unlöslichmachen und den wasserabweisenden Mitteln zusammengesetzt wird, um die Kinetik der Wiederaufnahme von Wasser des Papiers zu begrenzen.

12. Platte nach Anspruch 1, **dadurch gekennzeichnet, dass** die Pigmentschicht aus einer Pigmentmasse erhalten wird, deren Trockengehalt größer als 40 Gew.-% ist.

**EP 0 521 804 B2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 8803871 A
- EP 0229562 A